# EUROPÄISCHE PATENTSCHRIFT

(11) **EP 3 320 012 B1**
(45) Veröffentlichungstag und Bekanntmachung des Hinweises auf die Patenterteilung: **08.04.2020**
(21) Anmeldenummer: 16736107.0
(22) Anmeldetag: 06.07.2016
(51) Int. Cl.: C08G 18/54, C08G 18/18, C08G 18/22, C08G 18/24, C08G 18/40, C08G 18/42, C08G 18/48, C08G 101/00

(54) **HERSTELLUNG VON POLYURETHANSCHAUM**
PREPARATION OF POLYURETHANE FOAM
FABRICATION DE MOUSSE DE POLYURETHANE

(30) Priorität: 07.07.2015 EP 15175631
(43) Veröffentlichungstag der Anmeldung: 16.05.2018
(73) Patentinhaber: Evonik Operations GmbH, 45128 Essen (DE)
(72) Erfinder: GLOS, Martin, 46325 Borken (DE)
(74) Vertreter: Evonik Patent Association
(86) Internationale Anmeldenummer: PCT/EP2016/065895
(87) Internationale Veröffentlichungsnummer: WO 2017/005760

(56) Entgegenhaltungen:
- EP-A1- 0 040 131
- DE-A1- 2 250 855

## Beschreibung

Die vorliegende Erfindung liegt auf dem Gebiet der Polyurethanschäume. Insbesondere betrifft sie die Herstellung von Polyurethanschäumen unter Verwendung spezieller OH-funktioneller Verbindungen, sowie weiterhin die Verwendung der Schäume, die damit hergestellt wurden. Es handelt sich hierbei um Polyurethanhartschäume.

Unter Polyurethan (PU) wird im Rahmen der vorliegenden Erfindung insbesondere ein Produkt erhältlich durch Reaktion von Polyisocyanaten und Polyolen bzw. Verbindungen mit Isocyanat-reaktiven Gruppen verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daher werden unter PU im Sinne der vorliegenden Erfindung sowohl Polyurethan als auch Polyisocyanurat, Polyharnstoffe und Uretdion-, Carbodiimid-, Allophanat-, Biuret- und Uretimin-Gruppen enthaltende Polyisocyanat-Reaktionsprodukte verstanden. Unter Polyurethanschaum (PU-Schaum) wird im Rahmen der vorliegenden Erfindung Schaum verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden Polyurethan auch weitere funktionelle Gruppen gebildet werden, wie z.B. Allophanate, Biurete, Harnstoffe, Carbodiimide, Uretdione, Isocyanurate oder Uretimine.

Bei den meisten Anwendungen für Polyurethanschäume wird versucht, ein möglichst geringes Raumgewicht (Dichte) des Schaumes zu erzielen, um möglichst wenig Material und Kosten aufwenden zu müssen. Hierdurch werden die mechanischen Eigenschaften eines PU-Schaums negativ beeinflusst. So kann ein Sitzpolster mit geringem Raumgewicht nicht die Rückstellkraft und damit den Sitzkomfort erreichen wie ein Schaum mit höherer Dichte. Ebenso gilt dies für Hartschäume, die bei geringeren Dichten entsprechend schlechtere mechanische Eigenschaften, wie z.B. Stauchhärte, aufweisen. Hierbei kommt es bei geschlossenzelligen Schäumen zum sogenannten Schrumpf. Der Schaum verliert nach seiner Herstellung an Volumen, weil die Polymermatrix dem Atmosphärendruck nicht standhalten kann. Dieser Effekt ist dem Fachmann bekannt.

In der Praxis wird üblicherweise mehr Reaktionsgemisch eingesetzt, als theoretisch zur Ausfüllung eines bestimmten Volumens notwendig ist. Diese sogenannte Überpackung ist notwendig um eine Form komplett auszufüllen und/oder ein höheres Raumgewicht zu erreichen, damit am Ende ein nicht schrumpfender Schaum zur Verfügung steht. Dadurch wird erreicht, dass entsprechend hergestellte Produkte wie z.B Kühlschränke, Dämmplatten oder Metall-Verbundelemente formstabil bleiben und keine Verformungen aufweisen.

Bei frei gestiegenen Schäumen wie z.B. Sprühschaum, muss eine Reaktionsmischung, auch SchaumFormulierung genannt, entsprechend zusammengesetzt sein, so dass die nötigen mechanischen Eigenschaften erreicht werden.

EP 0 040 131 A1 beschreibt ein Verfahren zur Herstellung von Polyurethan-Weichschaumstoffen hoher Festigkeit aus organischen Polyisocyanaten, Polyetherpolyolen und hydroxylierten Harzen auf Basis von Keton-Formaldehyd-Kondensaten.

DE 22 50 855 A1 beschreibt ein Verfahren zum Herstellen von hitze- und flammfesten PolyurethanSchaumstoffen durch Umsetzen von organischen Polyisocyanaten mit Polyhydroxyverbindungen, wobei als Polyhydroxyverbindung das Reaktionsprodukt aus einem aliphatischen Keton, Formaldehyd und einem Alkanolamin mit sekundärer oder primärer Aminogruppe verwendet wird.

Die konkrete Aufgabe der vorliegenden Erfindung war es nun, die Bereitstellung von PU-Schäumen mit verbesserten mechanischen Eigenschaften zu ermöglichen. Und zwar sollen sich die PU-Schäume insbesondere durch einen verringerten Schrumpf auszeichnen.

Überraschenderweise wurde nun gefunden, dass bei Verwendung bestimmter erfindungsgemäßer OH-funktioneller Verbindungen auf Basis teilweise oder vollständig hydrierter Keton-Aldehydharze PU-Schäume mit verbesserten mechanischen Eigenschaften hergestellt werden können. Die entsprechenden PU-Schäume zeigen bei gleicher Dichte insbesondere eine geringere Neigung zum Schrumpf. Dadurch ist es möglich, entsprechende Produkte wie Kühlmöbel, Isolationspanele oder Sprühschaum mit geringerem Gewicht herzustellen als bisher.

Gegenstand der Erfindung sind vor diesem Hintergrund Zusammensetzungen zur Herstellung von Polyurethanhartschäumen, umfassend zumindest eine Isocyanat-Komponente, optional eine Polyolkomponente, optional einen Katalysator, der die Ausbildung einer Urethan- oder Iscyanurat-Bindung katalysiert, optional ein Treibmittel,
wobei die Zusammensetzung zusätzlich mindestens eine OH-funktionelle Verbindung (OHV) aufweist, erhältlich durch die teilweise oder vollständige Hydrierung von Keton-Aldehydharzen, wobei die OH-funktionelle Verbindung mindestens ein Strukturelement der Formel (1a) sowie optional der Formeln (1b) und/oder (1c) enthält, 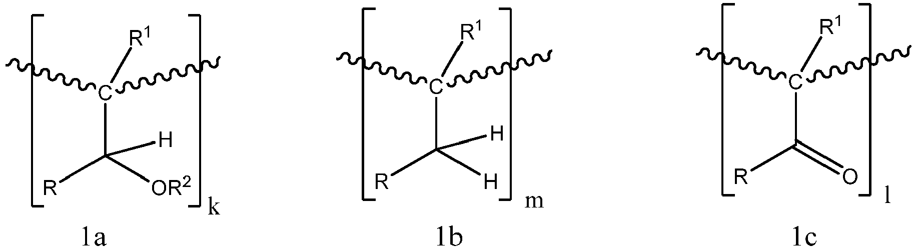 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können z.B. mit Heteroatomen, Halogen etc.,
R¹ = H oder CH₂OH,
R² = H oder ein Rest der Formel

   -(CH₂-CH(R')O-)_{y}-H

   mit R' gleich Wasserstoff, Methyl, Ethyl oder Phenyl und y = 1 bis 50,
k = 2 bis 15, bevorzugt 3 bis 12, besonders bevorzugt 4 bis 11,
m = 0 bis 13, bevorzugt 0 bis 9, z.B. 1 bis 9,
l = 0 bis 2, z.B. 1 bis 2,
wobei die Summe aus k+l+m zwischen 5 und 15, bevorzugt zwischen 5 und 12 liegt und k > m ist, mit der Maßgabe, dass zumindest 90 Gew.-Teile der enthaltenen Polyole bezogen auf 100 Gew.-Teile Polyolkomponente eine OH-Zahl größer 100, vorzugsweise größer 150, insbesondere größer 200 aufweisen.

Insbesondere sind Polyolkomponente und Katalysator zwingend enthalten, also nicht optional, was einer bevorzugten Ausführungsform der Erfindung entspricht.

Die erfindungsgemäßen OH-funktionellen Verbindungen sind erhältlich durch die teilweise oder vollständige Hydrierung von Keton-Aldehydharzen und enthalten mindestens 1 Strukturelement nach Formel (1a) sowie optional der Formeln (1b) und/oder (1c).

Die Strukturelemente können alternierend oder statistisch verteilt sein, wobei die Strukturelemente CH₂-Gruppen linear und/oder CH-Gruppen verzweigend verknüpft sein können.

In einer bevorzugten Form der Erfindung enthalten die erfindungsgemäßen OH-funktionellen Verbindungen mindestens 1 Strukturelement nach Formel (2a) sowie optional der Formeln (2b) und/oder (2c), 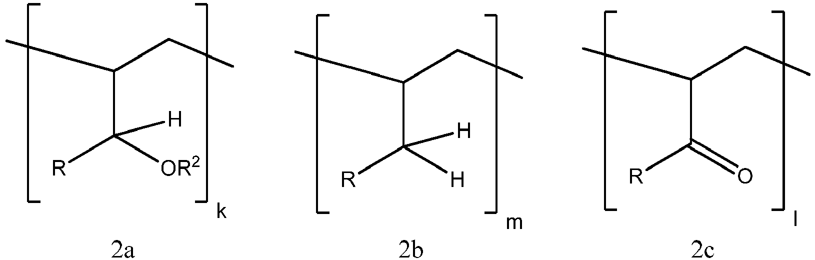 wobei die Indices k, m und I, sowie die Reste R und R² die oben beschriebenen Bedeutungen haben.

Der erfindungsgemäße Gegenstand ermöglicht die Bereitstellung von PU-Hartschaumstoff, der sich durch einen verringerten Schrumpf auszeichnet. Die resultierenden PU-Schaumstoffe sind vorteilhafterweise dimensionsstabil, hydrolysestabil, weisen ein hervorragendes Langzeitverhalten auf. Sie verfügen vorteilhafterweise über sehr gute Isolationseigenschaften, ein sehr hohes Dämmvermögen, hohe mechanische Festigkeit, hohe Steifigkeit, hohe Druckfestigkeit.

Keton-Aldehyd-Harze und ihre Herstellung, insbesondere durch Kondensation von Ketonen mit Aldehyden, sind schon seit langem bekannt. Ihre Herstellung erfolgt z.B. durch alkalikatalysierte Kondensation von Ketonen mit Aldehyden. Als Aldehyde kommen insbesondere Formaldehyd, aber auch andere wie z.B. Acetaldehyd und Furfural in Betracht. Neben aliphatischen Ketonen wie z.B. Aceton können vor allem cyclische Produkte wie Cyclohexanon, Methylcyclohexanon und Cyclopentanon eingesetzt werden. Verfahren zur Herstellung sind z. B. beschrieben in DE 3324287 A1, DE 102007045944 A1, US 2540885, US 2540886, DE 1155909 A1, DE 1300256 und DE 1256898.

Auch die erfindungsgemäß einzusetzenden OH-funktionellen Verbindungen (OHV), erhältlich durch die teilweise oder vollständige Hydrierung von Keton-Aldehydharzen, sind an sich bekannt.

Ihre Herstellung und Verwendung wird in den folgenden Schriften detailliert beschrieben:
DE 102007018812 A1, die hiermit als Referenz eingeführt und auf deren gesamte Offenbarung verwiesen wird und deren Inhalt hiermit in diese Anmeldung aufgenommen wird, beschreibt die Herstellung von carbonylhydrierten Keton-Aldehydharzen sowie die teilweise oder vollständige Umsetzung der Hydroxylgruppen von carbonylhydrierten Keton-Aldehydharzen mit einem oder mehreren Alkylenoxiden und gegebenenfalls anschließender vollständiger oder teilweiser Veresterung mit organischen und/oder anorganischen Säuren, insbesondere wird dort die Herstellung von alkoxylierten Verbindungen der Formel (1a), also mit R2 ≠ H und deren Verwendung als Dispergiermittel beschrieben. Ebenso werden dort Strukturvarianten mit bi-reaktiven Ketonen beschrieben.

DE 102006000644 A1, die hiermit als Referenz eingeführt und auf deren gesamte Offenbarung verwiesen wird und deren Inhalt hiermit in diese Anmeldung aufgenommen wird, beschreibt dort als Komponente A) die im Sinne der hier vorliegenden Erfindung einsetzbare Hydroxy-funktionellen Harze. Insbesondere werden dort hydrierte Folgeprodukte der Harze aus Keton und Aldehyd beschrieben. Bei der Hydrierung der Keton-Aldehydharze kommt es zur Umwandlung der Carbonylgruppe des Keton-Aldehydharzes in eine sekundäre Hydroxygruppe, dabei kann ein Teil der Hydroxygruppen abgespalten werden, so dass Alkylgruppen resultieren. Es wird die Verwendung in verschiedenen Bereichen, allerdings keine Polyurethanschäume, beschrieben.

DE10326893A1, die hiermit als Referenz eingeführt und auf deren gesamte Offenbarung verwiesen wird und deren Inhalt hiermit in diese Anmeldung aufgenommen wird, beschreibt die Herstellung von Keton-Aldehydharzen, die zur Herstellung der erfindungsgemäß einsertzbaren hydroxy-funktionellen Harze eingesetzt werden können. Es wird die Verwendung in verschiedenen Bereichen, allerdings keine Polyurethanschäume, beschrieben.

Die erfindungsgemäßen Keton-Aldehydharze können aliphatische und/oder cyclische Ketone, vorzugsweise Cyclohexanon und alle alkylsubstituieren Cyclohexanone mit einem oder mehreren Alkylresten, die insgesamt 1 bis 8 Kohlenwasserstoffatome aufweisen, einzeln oder in Mischung enthalten. Als Beispiele können 4-tert-Amylcyclohexanon, 2-sek-Butylcyclohexanon, 2-tert. Butylcyclohexanon, 4-tert.Butylcyclohexanon, 2-Methylcyclohexanaon und 3,3,5-Trimethylcyclohexanon genannt werden. Bevorzugt werden Cyclohexanon, 4-tert.-Butylcyclohexanon und 3,3,5-Trimethylcyclohexanon.

Als aliphatische Aldehyde eignen sich prinzipiell unverzweigte oder verzweigte Aldehyde, wie z.B. Formaldehyd, Acetaldehyd, n-Butyraldehyd und/oder iso-Butyraldehyd sowie Dodecanal usw.; bevorzugt wird jedoch Formaldehyd allein oder in Mischungen eingesetzt.

Das Formaldehyd wird üblicherweise als ca. 25 bis 40 Gew.-%ige wässrige Lösung eingesetzt. Andere Einsatzformen des Formaldehyds wie z.B. auch die Verwendung als para-Formaldehyd oder Trioxan sind ebenfalls möglich. Aromatische Aldehyde wie z.B. Benzaldehyd, können in Mischung mit Formaldehyd ebenfalls enthalten sein.

Als weitere Monomere können die erfindungsgemäßen Keton-Aldehydharze vorrangig Ketone, allein oder in Mischung, enthalten, die alophatischen, cycloaliphatischen, aromatischen oder gemischten Charakter besitzen. Als Beispiele seien Aceton, Acetophenon, Methylethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon und Cyclooctanon genannt. Bevorzugt sind jedoch Methylethylketon und Acetophenon. Im Allgemeinen können alle in der Literatur für Ketonharzsynthesen als geeignet genannte Ketone, in der Regel alle C-H-aciden Ketone, eingesetzt werden.

In einer bevorzugten Ausführungsform werden erfindungsgemäße OH-funktionellen Verbindungen (OHV) verwendet, die nach den in DE102007018812A1 und DE 102006000644 A1 beschriebenen Verfahren hergestellt wurden.

Neben den erfindungsgemäßen OH-funktionellen Verbindungen (OHV) können als weitere isocanatreatkiven Substanzen alle nach dem Stand der Technik bekannten isocyanat-reaktiven Komponenten als Polyole zum Einsatz kommen.

Die erfindungsgemäßen OH-funktionellen Verbindungen (OHV) können in Substanz oder auch in einem Lösungsmittel zur Verwendung kommen. Hierbei können alle geeigneten Substanzen zum Einsatz kommen, die bei der Herstellung von PU-Schäumen verwendbar sind. Bevorzugt können als Lösungsmittel Substanzen verwendet werden, die in üblichen Rezepturen bereits zum Einsatz kommen wie z.B. OH-funktionelle Verbindungen, Polyole, Flammschutzmittel, etc.

Da die erfindungsgemäßen OH-funktionellen Verbindungen (OHV) oftmals Schmelzpunkte von über 50°C oder auch über 90°C aufweisen können und da die Herstellung von PU-Schäumen bevorzugt ausgehend von flüssigen Reaktionsmischungen erfolgt, kann es bevorzugt sein, die erfindungsgemäßen OH-funktionellen Verbindungen (OHV) in anderen Substanzen zu lösen und/oder die Temperatur der Ausgangsmaterialien entsprechend zu erhöhen, so dass alle Komponenten in flüssiger Form vorliegen und vorzugsweise eine Viskosität haben, die eine gute Verarbeitung ermöglicht.

Eine bevorzugte erfindungsgemäße Zusammensetzung enthält die folgenden Bestandteile
a) mindestens eine erfindungsgemäße OH-funktionelle Verbindung (OHV)
b) optional weitere isocyanat-reaktive Komponenten, insbesondere weitere Polyole
c) mindestens ein Polyisocyanat und/oder Polyisocyanat-Präpolmer
d) optional einen Katalysator, der die Reaktion von Polyolen a) und b) mit den Isocyanaten c) beschleunigt, bzw. steuert
e) optional eine silizium-haltige Verbindung als Surfactant
f) optional ein oder mehrere Treibmittel
g) optional weitere Additive, Füllstoffe, Flammschutzmittel, etc.

Dabei ist es bevorzugt, dass die Komponenten b) und d) zwingend enthalten sind.

Es entspricht einer bevorzugten Ausführungsform der Erfindung, wenn zur Herstellung der Polyurethanschäume eine Komponente mit mindestens 2 isocyanat-reaktiven Gruppen, bevorzugt eine Polyol-Komponente, ein Katalysator sowie ein Polyisocyanat und/oder ein Polyisocyanat-Präpolymer eingesetzt werden. Dabei wird der Katalysator insbesondere über die Polyol-Komponente eingebracht. Geeignete Polyol-Komponenten, Katalysatoren sowie Polyisocyanate und/oder Polyisocyanat-Präpolymere werden weiter unten beschrieben.

Eine weitere Ausführungsform der Erfindung ist die Herstellung von Zusammensetzungen zur Herstellung von PU-Schäumen, die nur einen Teil der Bestandteile a) bis g) enthält, insbesondere die Bestandteile a) bis g) außer die Isocyanaten c) enthält.

Die erfindungsgemäß einzusetzenden OH-funktionellen Verbindungen (OHV), in Gesamtmenge, können vorzugsweise in einem Massenanteil von 0,1 bis 100,0 Teilen (pphp), vorzugsweise 0,5 bis 100,0 Teilen, bevorzugt 1 bis 80 Teilen und besonders bevorzugt 3 bis 50 Teilen bezogen auf 100 Teile (pphp) Polyolkomponente eingesetzt werden, Polyole hier als Gesamtheit aller isocyanat-reaktiven Verbindungen. Wenn also 100 Teile (pphp) OHV eingesetzt werden, dann sind also keine weiteren isocyanat-reaktiven Komponenten enthalten.

In einer weiteren bevorzugten Ausführungsform der Erfindung ist die OH-funktionelle Verbindung (OHV) in Gesamtmenge in einem Massenanteil von zumindest 30 Teilen, bevorzugt zumindest 35 Teilen, besonders bevorzugt zumindest 40 Teilen bezogen auf 100 Teile Polyolkomponente enthalten.

In einer bevorzugten Ausführungsform werden also nur die OH-funktionellen Verbindungen (OHV), aber keine weiteren Polyole eingesetzt. In einer anderen deutlich mehr bevorzugten Ausführungsform wird neben den OH-funktionellen Verbindungen (OHV) noch weiteres Polyol eingesetzt, das ungleich OHV ist.

Die erfindungsgemäß einzusetzenden OH-funktionellen Verbindungen (OHV) können demnach sowohl als Additiv in geringen Mengen als auch als Hauptkomponente in großen Mengen zum Einsatz kommen, je nachdem welches Eigenschaftsprofil erwünscht ist.

Bei Einsatz als Additiv können sie vorzugsweise in einem Massenanteil von 0,1 bis 10 Teilen (pphp), bevorzugt 0,5 bis 8, besonders bevorzugt 0,9 bis 6 Teile bezogen auf 100 Teile (pphp) Polyolkomponente eingesetzt werden, Polyole hier als Gesamtheit aller isocyanat-reaktiven Verbindungen.

Bei Einsatz als Hauptkomponente können sie vorzugsweise in einem Massenanteil von 10 bis 100 Teilen (pphp), bevorzugt 20 bis 95 Teile, besonders bevorzugt 30 bis 90 Teile bezogen auf 100 Teile (pphp) Polyolkomponente eingesetzt werden, Polyole hier als Gesamtheit aller isocyanat-reaktiven Verbindungen.

Als Polyolkomponente b) geeignete Polyole im Sinne der vorliegenden Erfindung sind alle organischen Substanzen mit einer oder mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere Polyurethan-Beschichtungen, Polyurethan-Elastomeren oder auch Schaumstoffen; üblicherweise verwendeten Polyetherpolyole und/oder Polyesterpolyole und/oder hydroxylgruppenhaltigen aliphatischen Polycarbonate, insbesondere Polyetherpolycarbonatpolyole und/oder Polyole natürlicher Herkunft, sogenannte "natural oil based polyols" (NOPs). Üblicherweise besitzen die Polyole eine Funktionalität von 1.8 bis 8 und zahlengemittelte Molekulargewichte im Bereich von 500 bis 15000. Üblicherweise kommen die Polyole mit OH-Zahlen im Bereich von 10 bis 1200 mg KOH/g zum Einsatz.

Zur Herstellung der PU-Hartschäume kommen Polyole oder Mischungen davon zum Einsatz mit der Maßgabe, dass zumindest 90 Gew.-Teile der enthaltenen Polyole bezogen auf 100 Gew.-Teile Polyolkomponente eine OH-Zahl größer 100, vorzugsweise größer 150, insbesondere größer 200 aufweisen. Der prinzipielle Unterschied zwischen Weichschaum und Hartschaum ist, dass ein Weichschaum ein elastisches Verhalten zeigt und reversibel verformbar ist. Wenn der Weichschaum durch Krafteinwirkung verformt wird, geht er wieder in seine Ausgangsform zurück, sobald die Krafteinwirkung entfällt. Der Hartschaum dagegen wird dauerhaft verformt.

Polyetherpolyole können nach bekannten Verfahren hergestellt werden, beispielsweise durch anionische Polymerisation von Alkylenoxiden in Gegenwart von Alkalihydroxiden, Alkalialkoholaten oder Aminen als Katalysatoren und unter Zusatz mindestens eines Startermoleküls, dass bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Bortrifluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und 1,2-Propylenoxid eingesetzt. Die Alkylenoxide können einzeln, kumulativ, blockweise, alternierend nacheinander oder als Mischungen verwendet werden. Als Startmoleküle kommen insbesondere Verbindungen mit mindestens 2, vorzugsweise 2 bis 8 Hydroxylgruppen oder mit mindestens zwei primären Aminogruppen im Molekül zum Einsatz. Als Startermoleküle eingesetzt werden können z.B. Wasser, 2-, 3- oder 4-wertige Alkohole wie Ethylenglykol, Propandiol-1,2 und -1,3, Diethylenglykol, Dipropylenglykol, Glycerin, Trimethylolpropan, Pentaerythrit, Rizinusöl usw., höhere polyfunktionelle Polyole, insbesondere Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin, oder Amine wie Anilin, EDA, TDA, MDA und PMDA, besonders bevorzugt TDA und PMDA. Die Wahl des geeigneten Startermoleküls ist abhängig von dem jeweiligen Anwendungsgebiet des resultierenden Polyetherpolyols bei der Polyurethanherstellung.

Polyesterpolyole basieren auf Estern mehrwertiger aliphatischer oder aromatischer Carbonsäuren, bevorzugt mit 2 bis 12 Kohlenstoffatomen. Beispiele für aliphatische Carbonsäuren sind Bernsteinsäure, Glutarsäure, Adipinsäure, Korksäure, Azelainsäure, Sebacinsäure, Decandicarbonsäure, Maleinsäure und Fumarsäure. Beispiele für aromatische Carbonsäuren sind Phthalsäure, Isophthalsäure, Terephthalsäure und die isomeren Naphthalindicarbonsäuren. Die Polyesterpolyole werden durch Kondensation dieser mehrwertigen Carbonsäuren mit mehrwertigen Alkoholen, vorzugsweise von Diolen oder Triolen mit 2 bis 12, besonders bevorzugt mit 2 bis 6 Kohlenstoffatomen, bevorzugt Trimethylolpropan und Glycerin erhalten.

Gemäß einer bevorzugten Ausführungsform der Erfindung sind in der erfindungsgemäßen Zusammensetzung Polyesterpolyol(e) enthalten.

Polyetherpolycarbonatpolyole sind Polyole, welche Kohlenstoffdioxid als Carbonat gebunden enthalten. Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von CO₂ als Comonomer ökologisch sehr vorteilhaft, da diese Reaktion die Umsetzung eines Treibhausgases zu einem Polymer darstellt. Die Herstellung von Polyetherpolycarbonatpolyolen durch Anlagerung von Alkylenoxiden und Kohlendioxid an H-funktionelle Startsubstanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie beispielsweise in US-A 3900424 oder US-A 3953383 beschrieben sind. Des Weiteren sind mono- und binukleare Metallkomplexe zur Copolymerisation von CO2 und Alkylenoxiden erfolgreich eingesetzt worden (WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (US-A 4500704, WO 2008/058913). Geeignete Alkylenoxide und H-funktionelle Startsubstanzen sind solche, die auch zur Herstellung von carbonatfreien Polyetherpolyolen - wie oben beschrieben - eingesetzt werden.

Polyole auf Basis nachwachsender Rohstoffe "Natural oil based polyols" (NOPs) zur Herstellung von Polyurethanschäumen sind mit Blick auf die langfristig begrenzte Verfügbarkeit fossiler Ressourcen, namentlich Öl, Kohle und Gas, und vor dem Hintergrund steigender Rohölpreise von zunehmendem Interesse und bereits vielfach in solchen Anwendungen beschrieben (WO 2005/033167; US 2006/0293400, WO 2006/094227, WO 2004/096882, US 2002/0103091, WO 2006/116456 und EP 1678232). Mittlerweile sind auf dem Markt eine Reihe dieser Polyole von verschiedenen Herstellern verfügbar (WO2004/020497, US2006/0229375, WO2009/058367). In Abhängigkeit vom Basis-Rohstoff (z.B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden: a) Polyole auf Basis nachwachsender Rohstoffe, die soweit modifiziert werden, dass sie zu 100 % zur Herstellung von Polyurethanen eingesetzt werden können (WO2004/020497, US2006/0229375); b) Polyole auf Basis nachwachsender Rohstoffe, die bedingt durch ihre Aufarbeitung und Eigenschaften nur zu einem gewissen Anteil das petrochemisch basierte Polyol ersetzen können (WO2009/058367).

Eine weitere Klasse von einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 % oder mehr in disperser Verteilung enthalten. Einsetzbar sind unter anderem SAN-, PHD- und PIPA-Polyole. SAN-Polyole sind hochreaktive Polyole, welche ein Copolymer auf der Basis von Styrol/Acrylnitril (SAN) dispergiert enthalten. PHD-Polyole sind hochreaktive Polyole, welche Polyharnstoff ebenfalls in dispergierter Form enthalten. PIPA-Polyole sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Eine weitere Klasse von einsetzbaren Polyolen sind solche, die als Prepolymere durch Umsetzung von Polyol mit Isocyanat in einem Molverhältnis von vorzugsweise 100 zu 1 bis 5 zu 1, bevorzugt 50 zu 1 bis 10 zu 1, erhalten werden. Solche Prepolymere werden vorzugsweise gelöst in Polymer angesetzt, wobei das Polyol bevorzugt dem zur Herstellung der Prepolymeren eingesetzten Polyol entspricht.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 40 bis 350. Ein Index von 100 steht für ein molares Verhältnis der reaktiven Gruppen von 1 zu 1.

Als Isocyanatkomponenten c) werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Besonders bevorzugt werden Isocyanate in einem Bereich von 60 bis 200 mol% relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanatomethylcyclohexan (Isophorondiisocyanat oder kurz IPDI), 2,4- und 2,6-Hexahydrotoluylendiisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Naphthalindiisocyanat, Diethyltoluoldiisocyanat, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden. Ebenso können entsprechende "Oligomere" der Diisocyanate eingesetzt werden (IPDI-Trimer auf basis Isocyanurat, Biurete- Urethdione.) Des Weiteren ist der Einsatz von Präpolymeren auf Basis der oben genannten Isocyanate möglich.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Prepolymeren. Beispiele für besonders geeignete Isocyanate sind beispielsweise in EP 1712578, EP 1161474, WO 00/58383, US 2007/0072951, EP 1678232 und der WO 2005/085310 aufgeführt, auf die hier in vollem Umfang Bezug genommen wird.

### d) Katalysatoren

Geeignete Katalysatoren d) im Sinne der vorliegenden Erfindung sind alle Verbindungen, die in der Lage sind die Reaktion von Isocyanaten mit OH- Funktionen, NH-Funktionen oder anderen isocyanat-reaktiven Gruppen zu beschleunigen. Hierbei kann auf die üblichen aus dem Stand der Technik bekannten Katalysatoren zurückgegriffen werden, umfassend z.B. Amine (cyclische, acyclische; Monoamine, Diamine, Oligomere mit einer oder mehreren Aminogruppen), metallorganische Verbindungen und Metallsalze, vorzugsweise die des Zinn, Eisen, Wismut und Zink. Insbesondere können als Katalysatoren Gemische mehrerer Komponenten eingesetzt werden.

Komponente e) können oberflächenaktive siliziumhaltige Verbindungen sein die als Additiv dienen, um die gewünschte Zellstruktur und den Verschäumungsprozess zu optimieren. Daher werden solche Additive auch Schaumstabilisatoren genannt. Hierbei können im Rahmen dieser Erfindung alle Si-haltigen Verbindungen eingesetzt werden, die die Schaumherstellung unterstützen (Stabilisierung, Zellregulierung, Zellöffnung, etc.). Diese Verbindungen sind aus dem Stand der Technik hinreichend bekannt.

Die erfindungsgemäß einzusetzenden OH-funktionellen Verbindungen können vorteilhafterweise oberflächenaktive Eigenschaften haben und somit die Rolle der Stabilisatoren zumindest anteilig übernehmen.

Als oberflächenaktive Si-haltige Verbindungen können alle bekannten Verbindungen eingesetzt werden, die zur Herstellung von PU-Schaum geeignet sind.

Entsprechende, im Sinne dieser Erfindung einsetzbare Siloxanstrukturen werden z.B. in den folgenden Patentschriften beschrieben, wobei dort die Verwendung allerdings nur in klassischen Polyurethanschäumen, als Formschaum, Matratze, Isolationsmaterial, Bauschaum, etc., beschrieben ist: CN 103665385, CN 103657518, CN 103055759, CN 103044687, US 2008/ 0125503, US 2015/0057384, EP 1520870 A1, EP 1211279, EP 0867464, EP 0867465, EP 0275563. Diese vorgenannten Schriften werden hiermit als Referenz eingeführt und gelten als Teil des Offenbarungsgehaltes der vorliegenden Erfindung.

Gemäß einer weiteren bevorzugten Ausführungsform der Erfindung zeichnet sich die erfindungsgemäße Verwendung dadurch aus, dass die Gesamtmenge der optional eingesetzten siliziumhaltigen Verbindung(en) so bemessen ist, dass der Massenanteil bezogen auf das fertige Polyurethan 0,01 bis 10 Gew.-%, bevorzugt 0,1 bis 3 Gew.-% beträgt.

Die Verwendung von Treibmitteln f) ist optional, je nachdem welches Verschäumungsverfahren verwendet wird. Es kann mit chemischen und physikalischen Treibmitteln gearbeitet werden. Die Wahl des Treibmittels hängt hier stark von der Art des Systems ab.

Je nach Menge des verwendeten Treibmittels wird ein Schaum mit hoher oder niedriger Dichte hergestellt. So können Schäume mit Dichten von 5 kg/m³ bis 900 kg/m³ hergestellt werden. Bevorzugte Dichten sind 8 bis 800, besonders bevorzugt 10 bis 600 kg/m³, insbesondere 30 bis 150 kg/m³.

Als physikalische Treibmittel können entsprechende Verbindung mit passenden Siedepunkten eingesetzt werden. Ebenso können chemische Treibmittel eingesetzt werden, die mit NCO-Gruppen und Freisetzung von Gase reagieren, wie beispielsweise Wasser oder Ameisensäure. Beispiele für Treibmittel sind verflüssigtes CO₂, Stickstoff, Luft, leichtflüchtige Flüssigkeiten, beispielsweise Kohlenwasserstoffe mit 3, 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Hydrofluoroolefine (HFO) oder Hydrohaloolefine wie z.B. 1234ze, 1233zd(E) oder 1336mzz, Sauerstoffhaltige Verbindungen wie Methylformiat, Aceton und Dimethoxymethan, oder Chlorkohlenwasserstoffe, bevorzugt Dichlormethan und 1,2-Dichlorethan.

Als Zusatzstoffe g) können alle nach dem Stand der Technik bekannten Substanzen verwendet werden, die bei der Herstellung von Polyurethanen, insbesondere von Polyurethanschaumstoffen, Verwendung finden, wie zum Beispiel Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren, usw.

Als Flammschutzmittel kann die erfindungsgemäße Zusammensetzung alle bekannten und zur Herstellung von Polyurethan-Schäumen geeigneten Flammschutzmittel aufweisen. Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit, Aluminiumoxide, Antimon-Verbindungen und Melamin, geeignet. Der erfindungsgemäße Einsatz der OH-funktionellen Verbindungen (OHV) ermöglicht den Einsatz sehr hoher Mengen an Flammschutzmittel, insbesondere auch flüssiger Flammschutzmittel, wie z.B. TEP, TCPP, TCEP, DMMP, was mit herkömmlichen Polyolen zu sehr instabilen Formulierungen führt. Der erfindungsgemäße Einsatz der OH-funktionellen Verbindungen (OHV) ermöglicht sogar den Einsatz von Flammschutzmittel in Massenanteilen von vorteilhafterweise ≥ 30 pphp, vorzugsweise ≥50 pphp ,insbesondere ≥100 pphp, bezogen auf 100 Teile (pphp) Polyolkomponente, Polyole hier als Gesamtheit aller isocyanat-reaktiven Verbindungen. Solche Mengen führen sonst zu sehr instabilen Formulierungen, der erfindungsgemäße Einsatz der OH-funktionellen Verbindungen (OHV) ermöglicht es aber, diese Mengen einzusetzen.

Ein weiterer Gegenstand der Erfindung ist ein Verfahren zur Herstellung von Polyurethanhartschaum durch Umsetzung einer oder mehrerer Polyolkomponenten mit einer oder mehrerer Isocyanatkomponenten, wobei die Umsetzung in Gegenwart von mindestens einer OH-funktionellen Verbindung (OHV) erfolgt, erhältlich durch die teilweise oder vollständige Hydrierung von Keton-Aldehydharzen, wobei diese OH-funktionelle Verbindung mindestens ein Strukturelement der Formel (1a) sowie optional der Formeln (1b) und/oder (1c) enthält, 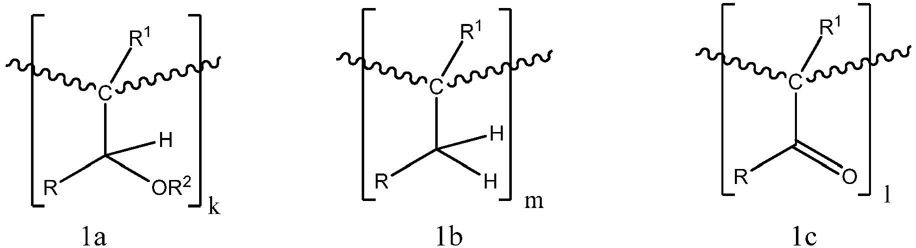 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können z.B. mit Heteroatomen, Halogen etc.
R¹ = H, CH₂OH,
R² = H, oder ein Rest der Formel -(CH₂-CH(R')O-)_{y}-H
mit R' gleich Wasserstoff, Methyl, Ethyl oder Phenyl und y = 1 bis 50,
k = 2 bis 15, bevorzugt 3 bis 12, besonders bevorzugt 4 bis 11
m = 0 bis 13, bevorzugt 0 bis 9
I = 0 bis 2
wobei die Summe aus k+l+m zwischen 5 und 15, vorzugsweise zwischen 5 und 12 liegt und k > m ist, mit der Maßgabe, dass zumindest 90 Gew.-Teile der eingesetzten Polyole bezogen auf 100 Gew.-Teile Polyolkomponente eine OH-Zahl größer 100, vorzugsweise größer 150, insbesondere größer 200 aufweisen.

Die erfindungsgemäß herzustellenden Schäume weisen Dichten von vorzugsweise 5 kg/m³ bis 900 kg/m³, bevorzugt 8 bis 800, besonders bevorzugt 10 bis 600 kg/m³ , insbesondere 30 bis 150 kg/m³ auf.

Insbesondere können geschlossenzellige PU-Schäume erhalten werden, wobei die Geschlossenzelligkeit vorteilhafterweise > 80%, vorzugsweise > 90 % beträgt. Dies entspricht einer ganz besonders bevorzugten Ausführungsform der Erfindung.

Die Bestimmung der Geschlossenzelligkeit erfolgt im Sinne dieser Erfindung vorzugsweise nach DIN ISO 4590 per Pyknometer.

In der DIN 14315-1 werden diverse Spezifikationen für PU-Schaum, dort PU-Spritzschaum, auch Sprühschaum genannt, festgelegt. Hier werden die Schäume - neben anderen Parametern - auch nach ihrer Geschlossenzelligkeit eingeteilt.

| Stufe | Anteil an geschlossenen Zellen |
|---|---|
| CCC1 | < 20% |
| CCC2 | 20 bis 80% |
| CCC3 | > 80 bis 89% |
| CCC4 | ≥ 90% |

Generell werden mit geschlossenzelligen PU-Schäumen (CCC3 und CCC4) bessere Lamda-Werte erzielt. Ein geschlossenzelliger Schaum benötigt eine höhere Dichte, damit die Polymermatrix stabil genug ist, um gegen den Atmosphärendruck standzuhalten. Daher kann es bei geschlossenzelligen Schäumen zum Schrumpf kommen.

Die vorliegende Erfindung ermöglicht es vorteilhafterweise, die Festigkeit der Polymermatrix des PU-Schaums zu erhöhen. Die Stauchhärte (bestimmbar DIN 53421) des PU-Schaums kann erhöht werden. Bei geschlossenzelligen Schäumen kann der Schrumpf verringert werden.

Das erfindungsgemäße Verfahren zur Herstellung von PU-Schäumen kann nach den bekannten Methoden durchgeführt werden, beispielsweise im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden.

Eine bevorzugte Polyurethan- bzw. Polyisocyanurat-Hartschaumformulierung im Sinne dieser Erfindung ergibt ein Raumgewicht von 5 bis 900 kg/m³ und hat die in Tabelle 1 genannte Zusammensetzung.

**Tabelle 1: Zusammensetzung einer bevorzugten Polyurethan- bzw. Polyisocyanurat-Hartschaumformulierung**

| Komponente | Gewichtsanteil |
|---|---|
| Erfindungsgemäße OH-funktionellen Verbindung (OHV) | 0,1 bis 100 |
| Polyol | 0 bis 99,9 |
| Amin-Katalysator | 0 bis 5 |
| Metall-Katalysator | 0 bis 10 |
| Polyethersiloxan | 0 bis 5 |
| Wasser | 0,01 bis 20 |
| Treibmittel | 0 bis 40 |
| Weitere Additive (Flammschutzmittel etc.) | 0 bis 300 |
| | |
| Isocyanat-Index: 10 bis 1000 | |

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen verwiesen.

Ein weiterer Gegenstand der Erfindung ist ein PU-Hartschaum, erhältlich durch das genannte Verfahren.

Gemäß einer bevorzugten Ausführungsform handelt es sich um einen Polyurethanhartschaum, dessen Raumgewicht von 5 bis 750 kg/m³, vorzugsweise von 5 bis 350 kg/m³ beträgt.

Gemäß einer weiteren bevorzugten Ausführungsform der Erfindung weist der Polyurethanschaum ein Raumgewicht von 5 bis 900 kg/m³, bevorzugt 8 bis 800, besonders bevorzugt 10 bis 600 kg/m³, insbesondere 30 bis 150 kg/m³ auf und die Geschlossenzelligkeit beträgt vorteilhafterweise > 80%, vorzugsweise > 90 %.

Gemäß einer weiteren bevorzugten Ausführungsform der Erfindung handelt es sich um einen geschlossenzelligen PU-Schaum (Anteil an geschlossenen Zellen > 80%, vorzugsweise 5= 90%) hergestellt mit Raumgewichten von größer 25 kg/ m³, bevorzugt größer 30 kg/ m³, besonders bevorzugt größer 40kg/ m³.

Gemäß einer bevorzugten Ausführungsform der Erfindung weist der Polyurethanschaum 0,1 bis 60 Massen-%, bevorzugt 0,5 bis 40 Massen-% und besonders bevorzugt von 1 bis 30 Massen-% an OH-funktionellen Verbindungen (OHV) auf.

Die erfindungsgemäßen Polyurethanschäume zeichnen sich vorteilhafterweise dadurch aus, dass sie mindestens eine erfindungsgemäße OH-funktionellen Verbindung (OHV), die mindestens ein Strukturelement der Formel (1a), wie oben definiert, aufweisen und vorzugsweise durch das erfindungsgemäße Verfahren erhältlich sind.

Die erfindungsgemäßen PU-Schäume (Polyurethan- oder Polyisocyanuratschaumstoffe) können als oder zur Herstellung von Isoliermaterialien, vorzugsweise Dämmplatten, Kühlschränken, Isolierschäumen, Fahrzeugsitzen, insbesondere Autositzen, Dachhimmeln, Matratzen, Filterschäumen, Verpackungsschäumen oder Sprühschäumen verwendet werden.

Insbesondere in der Kühlhaus-, Kühlgeräte- und Hausgeräteindustrie; z. B. zur Herstellung von Dämmplatten für Dächer und Wände, als Isoliermaterial in Containern und Lagerhäusern für tiefgekühlte Ware sowie für Kühl- und Gefriergeräte, können die erfindungsgemäßen PU-Schäume mit Vorteil eingesetzt werden.

Weitere bevorzugte Anwendungsfelder liegen im Fahrzeugbau, insbesondere zur Herstellung von Fahrzeughimmel, Karosserieteilen, Innenverkleidungen, Kühlfahrzeugen, Großcontainern, Transportpaletten, Verpackungslaminaten, in der Möbelindustrie, z.B. für Möbelteile, Türen, Verkleidungen, in Elektronikanwendungen.

Erfindungsgemäße Kühlapparaturen weisen als Isoliermaterial einen erfindungsgemäßen PU-Schaum (Polyurethan- oder Polyisocyanuratschaumstoff) auf.

Ein weiterer Gegenstand der Erfindung liegt in der Verwendung des PU-Schaums als Isolationsmaterial in der Kältetechnik, in Kühlmöbeln, im Bau-, Automobil-, Schiffbau- und/oder Elektronikbereich, als Dämmplatten, als Sprühschaum, als Einkomponentenschaum.

Ein weiterer Gegenstand der Erfindung liegt in der Verwendung von OH-funktionellen Verbindungen (OHV), erhältlich durch die teilweise oder vollständige Hydrierung von Keton-Aldehydharzen, wobei die OH-funktionelle Verbindung mindestens ein Strukturelement der Formel (1a) sowie optional der Formeln (1b) und/oder (1c) enthält, 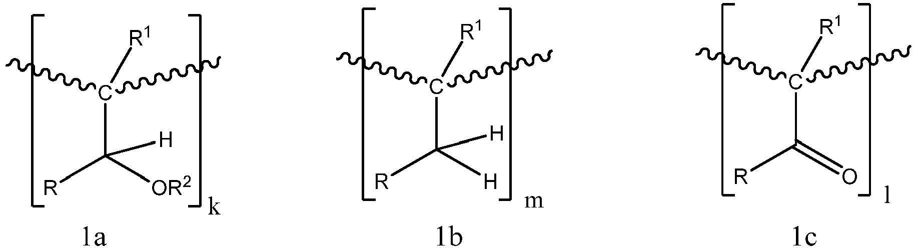 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können z.B. mit Heteroatomen, Halogen etc.,
R¹ = H, CH₂OH,
R² = H, oder ein Rest der Formel -(CH₂-CH(R')O-)_{y}-H
mit R' gleich Wasserstoff, Methyl, Ethyl oder Phenyl und y = 1 bis 50,
k = 2 bis 15, bevorzugt 3 bis 12, besonders bevorzugt 4 bis 11
m = 0 bis 13, bevorzugt 0 bis 9
I = 0 bis 2
wobei die Summe aus k+l+m zwischen 5 und 15, vorzugsweise zwischen 5 und 12 liegt und k > m ist, bei der Herstellung von PU-Hartschäumen,
insbesondere zur Verringerung des Schrumpfes und/oder als schaumstabilisierende Komponente bei der Herstellung von PU-Hartschäumen,
insbesondere mit der Maßgabe, dass zumindest 90 Gew.-Teile der eingesetzten Polyole bezogen auf 100 Gew.-Teile Polyolkomponente eine OH-Zahl größer 100, vorzugsweise größer 150, insbesondere größer 200 aufweisen.

Der Schrumpf kann auf übliche Weise durch mehrmaliges Vermessen der Volumina der Probekörper nach verschieden langen Aushärte- oder Lagerzeiten bestimmt werden.

Die erfindungsgemäße Verwendung zur Verbesserung der Brandwidrigkeit des PU-Schaums, vorzugsweise Verbesserung der Flammwidrigkeit und/oder Reduktion der Flammhöhe, insbesondere zur Erfüllung der Brandschutznorm von mindestens B2 gemäß DIN 4102-1, entspricht einer weiteren bevorzugten Ausführungsform der Erfindung. Hier wurden bei der Auswertung insbesondere die Brandeigenschaften für B2 Einstufung (DIN 4102) mittels der Flammhöhe bestimmt.

Außerdem ermöglicht der erfindungsgemäße Einsatz der OH-funktionellen Verbindungen (OHV) den Einsatz sehr hoher Mengen an Flammschutzmittel, was mit herkömmlichen Polyolen zu sehr instabilen Formulierungen führt.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele

### Verwendete Materialien

Erfindungsgemäße OH-funktionelle Verbindungen (OHV) wurden hergestellt nach den in DE 102007018812 beschriebenen Verfahren. OHV-1 entspricht dem in DE 102007018812 beschriebenen "Carbonylhydriertes Keton-Aldehydharz Nr. II".

1200 g Acetophenon, 220 g Methanol, 0,3 g Benzyltributylammoniumchlorid und 360 g einer 30%igen, wässrigen Formaldehydlösung werden vorgelegt und unter Rühren homogenisiert. Sodann erfolgte unter Rühren die Zugabe von 32 g einer 25%igen, wässrigen Natronlaugelösung. Bei 80 bis 85°C erfolgte dann unter Rühren die Zugabe von 655 g einer 30%igen, wässrigen Formaldehydlösung über 90 min. Der Rührer wurde nach 5 h Rühren bei Rückflusstemperatur abgestellt und die wässrige Phase von der Harzphase separiert. Das Rohprodukt wurde mit essigsaurem Wasser gewaschen, bis eine Schmelzprobe des Harzes klar erscheint. Dann wurde das Harz durch Destillation getrocknet. Es wurden 1270 g eines leicht gelblichen Harzes erhalten. Das Harz war klar und spröde und hatte einen Schmelzpunkt von 72°C. Die Farbzahl nach Gardner betrug 0,8 (50%ig in Ethylacetat). Der Formaldehydgehalt lag bei 35 ppm. Dieses Produkt wird als Grundharz bezeichnet.

300 g des Grundharzes wurden in 700 g Tetrahydrofuran (Wassergehalt ca. 7%) gelöst. Sodann erfolgte die Hydrierung bei 260 bar und 120°C in einem Autoklaven (Fa. Parr) mit Katalysatorkorb, der mit 100 mL eines handelsüblichen Ru-Katalysators (3% Ru auf Aluminiumoxid) gefüllt war. Nach 20 h wurde die Reaktionsmischung über ein Filter aus dem Reaktor abgelassen.

Die Reaktionsmischung wurde im Vakuum vom Lösemittel befreit. Es resultierte die erfindungsgemäße OH-funktionelle Verbindung OHV-1.

OHV-2 bis OHV-5 wurden ebenfalls entsprechend der DE102007018812 durch Oxalkylierung hergestellt. Es wurden pro OH-Funktion die folgenden Mengen Ethylenoxid (EO) oder Propylenoxid (PO) an OHV-1 angelagert:

| | |
|---|---|
| OHV-2: | OHV-1 + 3EO |
| OHV-3: | OHV-1 + 5EO |
| OHV-4: | OHV-1 + 3PO |
| OHV-5: | OHV-1 + 5PO |

Die erfindungsgemäßen Verbindungen hatten die folgenden OH-Zahlen (in mg KOH/g)

| | |
|---|---|
| OHV-1: | OH-Zahl= 325, |
| OHV-2: | OH-Zahl= 225 |
| OHV-3: | OH-Zahl= 188 |
| OHV-4: | OH-Zahl= 158 |
| OHV-5: | OH-Zahl= 127 |

Als Si-Surfactants wurden die folgenden Materialien eingesetzt.
Siloxan 1: Polyethersiloxan, wie in EP 1544235 A1 in Beispiel 14 beschrieben.
Siloxan 2: Polyethersiloxan, wie in US 2015/0057384 in Beispiel 2 beschrieben.

PS 3152: Polyesterpolyol der Firma Stepan
PS 2352: Polyesterpolyol der Firma Stepan
PS 2412: Polyesterpolyol der Firma Stepan
R 471: Daltolac R 471, Polyetherpolyol der Firma Huntsman
R 251: Daltolac R 251, Polyetherpolyol der Firma Huntsman
Voranol RN 490: Polyetherpolyol der Firma Dow
Terate 203: Polyesterpolyol der Firma Invista
TCPP: Tris(2-chlorisopropyl)phosphat der Firma Fyrol
Kosmos 75 von Fa. Evonik Industries AG, Katalysator auf Basis Kaliumoctoat
Kosmos 19 von Fa. Evonik Industries AG, Dibutylzinndilaurat
PMDETA: TEGOAMIN PMDETA von Fa. Evonik Industries AG, Amin-Katalysator
DMCHA: TEGOAMIN DMCHA von Fa. Evonik Industries AG, Amin-Katalysator
MDI (44V20): Desmodur 44V20L der Fa. Bayer Materialscience, Diphenylmethan-4,4'-diisocyanat (MDI) mit Isomeren und höherfunktionellen Homologen
Stepanpol PS-3152: Diethylenglykolphthalat-Polyesterpolyol, Stepan Company

### Schaumdichtebestimmung

Zur Bestimmung der Schaumdichte wurden aus den Schäumen Probekörper mit den Abmessungen (10x10x10 cm) geschnitten. Diese wurden gewogen um die Massen zu bestimmen. Die Bestimmung des Volumens erfolgte durch die Messung der Wasserverdrängung, indem die Proben in einem Becherglas mit Wasser untergetaucht und dabei die Gewichtszunahme gemessen wurde.

Auf diese Weise wurden die Volumina der Probekörper ermittelt. Durch mehrmaliges Vermessen der Probekörper nach verschieden langen Aushärtezeiten wurde somit der Schrumpf ermittelt.

### Beispiele: Herstellung von PU Schäumen

Bei der Verwendung von erfindungsgemäßen Verbindungen der Formel (OHV), die entweder als Feststoff vorlagen oder eine sehr hohe Viskosität aufwiesen, wurden diese im Flammschutzmittel gelöst und in dieser Form eingesetzt.

Die Durchführung der Verschäumungen erfolgte im Handmischverfahren. Dazu wurden die erfindungsgemäßen Verbindungen, Polyole, Flammschutzmittel, Katalysatoren, Wasser, konventioneller bzw. erfindungsgemäßer Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Anschließend wurde das Isocyanat (MDI) zugegeben, die Reaktionsmischung mit dem beschriebenen Rührer 5 s bei 3000 Upm verrührt. Im Falle der Pour-in-Place-Verschäumung wurde im Becher selbst aufgeschäumt ansonsten wurde das Gemisch in mit Papier ausgekleideten Kisten der Grundfläche von 27 x 14 cm überführt.

Im Falle von Fließ-Anwendungen wie zum Beispiel Kühlschrank-Systemen wurde das Gemisch sofort in eine auf 45°C thermostatisierte Aluminiumform mit den Abmessungen 145 cm x 14,5 cm x 3,5 cm eingetragen. Die Einsatzmenge an Schaumformulierung war dabei so bemessen, dass sie um 15 % über der zur Mindestbefüllung der Form notwendigen Menge lag. Je nach Untersuchungsmethode wurden die Probekörper schon nach 2 Stunden aus den Schaumblöcken geschnitten oder erst nach einem Tag die Proben genommen.

Bei den Becherschäumen wurde das Steigverhalten, also die äußere Gestalt, die Oberfläche des Schaums, sowie anhand einer Schnittfläche im oberen Teil des Schaums der Grad der Innenstörungen und die Porenstruktur visuell beurteilt anhand einer Skala von 1 bis 10, wobei 10 einen ungestörten Schaum und 1 einen extrem stark gestörten Schaum repräsentiert.

Die Stauchhärten der Schaumstoffe wurden an würfelförmigen Probekörpern mit 5 cm Kantenlänge nach DIN 53421 bis zu einer Stauchung von 10% gemessen (angegeben ist die in diesem Messbereich maximal aufgetretene Druckspannung).

In den Tabellen 2, 3 und 4 sind Ergebnisse mit frei gestiegenen Schäumen (Kisten) zusammengefasst.

Hierbei sind die mit "-Vgl." versehenen Beispiele die nicht erfinderischen Vergleichsbeispiele.
Es sind hier zusammengefasst: Die zur Herstellung der Schäume verwendeten Rezepturen , die Gewichte der Probekörper (mit Abmessung von 10x10x10 cm) sowie die Volumina der Probekörper und damit der Schrumpf nach verschiedenen Zeiträumen.

**Tabelle 2**

| Formulierung Beispiel | 1-Vgl. | 1 | 2-Vgl | 2 | 3-Vgl. | 3 |
|---|---|---|---|---|---|---|
| PS 2352 | 100 | 94 | 100 | 94 | 100 | 94 |
| OHV-1 | 0 | 6 | 0 | 6 | 0 | 6 |
| Kosmos 75 | 3 | 3 | 3 | 3 | 3 | 3 |
| PMDETA | 0,5 | 0,5 | 0,5 | 0,5 | 0,5 | 0,5 |
| Siloxan 2 | 2 | 2 | 2 | 2 | 2 | 2 |
| TCPP | 20 | 20 | 20 | 20 | 20 | 20 |
| Wasser | 1 | 1 | 1 | 1 | 1 | 1 |
| Cyclo-pentan | 13 | 13 | 14 | 14 | 15 | 15 |
| MDI (44V20) | 180 | 180 | 180 | 180 | 180 | 180 |
| | | | | | | |
| *Probekörper-Gewicht ing* | *31,5* | *31,5* | *31,3* | *30,7* | *29,3* | *29,7* |
| *Volumen in ml nach 2 h* | *981,1* | *981,2* | *980,0* | *978,9* | *972,7* | *975,4* |
| *Dichte in kg* /*m³* | *32,1* | *32,1* | *31,9* | *31,4* | *30,1* | *30,4* |
| *Volumen in ml nach 24h* | *957,4* | *966,4* | *941,6* | *957,7* | *931,2* | *947,7* |
| *24hSchrumpf*/*%* | *2,42* | *1,51* | *3,92* | *2,17* | *4,27* | *2,84* |
| *Volumen in ml nach 6d* | *929,3* | *947,5* | *903,8* | *938,3* | *880,3* | *913,5* |
| *6d Schrumpf*/*%* | *5,28* | *3,43* | *7,78* | *4,15* | *9,50* | *6,35* |

In allen drei Beispielen weisen die Schäume, die mit erfindungsgemäßen OH-funktionellen Verbindungen hergestellt wurden einen geringeren Schrumpf auf als die Vergleichsbeispiele. Dies war sowohl nach 24 Stunden als auch nach 6 Tagen der Fall.

**Tabelle 3 - rein Wasser getriebene Systeme**

| Formulierung Beispiel | 4-Vgl. | 4 |
|---|---|---|
| Daltolac R 471 | 30 | 30 |
| Daltolac R 251 | 70 | 64 |
| OHV-1 | | 6 |
| DMCHA | 1,5 | 1,5 |
| Siloxan 1 | 2 | 2 |
| TCPP | 20 | 20 |
| Water | 5 | 5 |
| | | |
| MDI (44V20) | 190 | 190 |
| | | |
| *Probekörper-Gewicht in g* | *32,0* | *31,5* |
| *Volumen in ml nach 2 h* | *971* | *963* |
| *Dichte in kg* /*m³* | *32,9* | *33,1* |
| *Volumen in ml nach 24h* | *954* | *949* |
| *24hSchrumpf* /*%* | *1,8* | *1,5* |
| *Volumen in ml nach 6d* | *940* | *937* |
| *6d Schrumpf*/*%* | *3,3* | *2,7* |

In Beispiel 4 wurde eine rein Wasser getriebene Formulierung untersucht. Hierbei weist der Schaum, der mit erfindungsgemäßen OH-funktionellen Verbindungen hergestellt wurde, einen geringeren Schrumpf auf als das Vergleichsbeispiel. Dies war sowohl nach 24 Stunden als auch nach 6 Tagen der Fall.

In Tabelle 4 sind Ergebnisse mit den alkoxylierten Verbindungen OHV-2 bis OHV-5 zusammengefasst.

**Tabelle 4**

| Formulierung Beispiel | 5-Vgl. | 5a | 5b | 5c | 5d |
|---|---|---|---|---|---|
| PS 2352 | 100 | 95 | 95 | 95 | 95 |
| OHV-2 | - | 5 | | | |
| OHV-3 | | | 5 | | |
| OHV-4 | | | | 5 | |
| OHV-5 | | | | | 5 |
| Kosmos 75 | 3 | 3 | 3 | 3 | 3 |
| PMDETA | 0,5 | 0,5 | 0,5 | 0,5 | 0,5 |
| Siloxan 2 | 2 | 2 | 2 | 2 | 2 |
| TCPP | 10 | 10 | 10 | 10 | 10 |
| Wasser | 1 | 1 | 1 | 1 | 1 |
| Cyclo-pentan | 15 | 15 | 15 | 15 | 15 |
| MDI (44V20) | 180 | 180 | 180 | 180 | 180 |
| | | | | | |
| *Probekörper-Gewicht in g* | *30,4* | *29,2* | *29,4* | *30,4* | *29,6* |
| *Volumen in ml nach 2 h* | *970,3* | *969,0* | *973,7* | *963,9* | *972,3* |
| *Dichte in kg* /*m³* | *31,4* | *30,1* | *30,2* | *31,5* | *30,4* |
| *Volumen in ml nach 24h* | *935,4* | *943,5* | *952,26* | *942,4* | *962,8* |
| *24hSchrumpf*/*%* | *3,6* | *2,6* | *2,2* | *2,2* | *1,0* |

Auch bei den alkoxylierten Verbindungen ist schon nach 24 Stunden zu erkennen, dass die erfindungsgemäßen Schaumformulierungen eine verminderte Neigung zum Schrumpf aufweisen.

### Beispiele zur Verbesserung der Stauchhärte

Für die in Tabelle 5 zusammengefassten Verschäumungen wurden die Rohstoffe auf 40°C erwärmt, damit die Viskositäten nicht zu hoch wurden und eine gute Durchmischung der Komponenten gewährleistet werden konnte. Hier wurden bei der Auswertung die Stauchhärten bestimmt.

**Tabelle 5**

| Formulierung Beispiel | 6. | 6-Vgl. | 7 | 7-Vgl. | 8 | 8-Vgl. |
|---|---|---|---|---|---|---|
| PS 2412 | 70 | 100 | | | 70 | 100 |
| PS 3152 | | | 70 | 100 | 0 | |
| OHV-1 | 30 | | 30 | | 30 | |
| Kosmos 75 | 1,5 | 1,5 | 1,5 | 1,5 | 1,5 | 1,5 |
| PMDETA | 0,2 | 0,2 | 0,2 | 0,2 | 0,2 | 0,2 |
| Siloxan 1 | 2 | 2 | 2 | 2 | 2 | 2 |
| Wasser | 2 | 2 | 2 | 2 | 1,5 | 1,5 |
| MDI (44V20) | 200 | 200 | 200 | 200 | 200 | 200 |
| <*Index*> | *209* | *223* | *184* | *186* | *227* | *244* |
| *Dichte in kg* /*m³* | *44,7* | *43,6* | *45,5* | *46,9* | *48,9* | *49,8* |
| *Stauchhärte in kPa* | | | | | | |
| *- vertikal* | *266* | *214* | *263* | *213* | *402* | *230* |
| -*horizontal* | *176* | *140* | *205* | *145* | *189* | *153* |

Die Beispiele 6 bis 8 zeigen, dass bei Verwendung der erfindungsgemäßen Verbindungen im Vergleich zu kommerziell erhältlichen Polyolen mit vergleichbaren OH-Zahlen höhere Stauchhärten in den Schäumen erzielt werden konnten ohne dass die Dichten erhöht werden mussten. Die gemessenen Werte der erfindungsgemäßen Beispiele waren sowohl in der Steigrichtung (vertikal) und quer zur Steigrichtung (horizontal) durchgehend höher als in den nicht erfindungsgemäßen Beispielen. Hierbei ist besonders interessant, dass die erhöhte Schaumhärte ohne eine Steigerung des Index oder der Isocyanatmenge erreicht werden konnte.

### Beispiele zum Brandverhalten (B2-Test)

Für die in Tabelle 6 zusammengefassten Verschäumungen wurden die Rohstoffe auf 40°C erwärmt, damit die Viskositäten nicht zu hoch wurden und eine gute Durchmischung der Komponenten gewährleistet werden konnte. Hier wurden bei der Auswertung die Brandeigenschaften für B2 Einstufung (DIN 4102) mittels der Flammhöhe bestimmt.

**Tabelle 6**

| Formulierung Beispiel | 9 | 10 | 11 |
|---|---|---|---|
| Datlolac 471 | 10 | | |
| PEG 400 | | | 60 |
| OHV-1 | 27 | 30 | 40 |
| TCPP | 63 | 70 | |
| Kosmos 75 | 1,5 | 1,5 | 1,5 |
| DMCHA | 0,6 | 0,6 | 0,6 |
| Siloxan 1 | 2 | 2 | 2 |
| Wasser | 1 | 1 | 1 |
| MDI (44V20) | 180 | 150 | 220 |
| *<Index>* | *366* | *374* | *250* |
| | | | |
| *Flammhöhe in mm* | *80* | *75* | *130* |

Die Beispiele 9 bis 11 zeigen, dass die erfindungsgemäßen Verbindungen geeignet sind, um Schäume herzustellen mit sehr guten Brandeigenschaften. So kann in den Beispielen 9 und 10 mit sehr hohen Mengen an Flammschutzmittel gearbeitet werden, was mit herkömmlichen Polyolen zu sehr instabilen Formulierungen führt. In Beispiel 11 konnte komplett auf Flammschutzmittel verzichtet werden und trotzdem eine Flammhöhe von weniger als 150 mm erreicht werden.

### Beispiele in Fließ-Anwendungen zur Verbesserung der Stauchhärte

Die in Tabelle 7 zusammengefassten Verschäumungen wurden in der oben beschriebenen AluminiumForm - sogenannte Bosch-Lanze - durchgeführt, um die Situation mit Fließstress in einer Kühlschrankherstellung zu simulieren. Die Auswertungen und Messungen erfolgten nach 24 Stunden.

**Tabelle 7**

| Formulierung ; Beispiel | 12-Vgl | 12a | 12b |
|---|---|---|---|
| Daltolac R 471 | 100 | 97,5 | 95 |
| OHV-1 | | 2,5 | 5 |
| TEGOAMIN DMCHA | 1,5 | 1,5 | 1,5 |
| Siloxan 1 | 2 | 2 | 2 |
| *cyclo*-Pentan | 13 | 13 | 13 |
| Wasser | 1,8 | 1,8 | 1,8 |
| MDI (44V20) | 170 | 170 | 170 |
| *<Index>* | *122* | *122* | *122* |
| | | | |
| *λ-Wert in mW*/*m·K* | *23,6* | *23,5* | *23,7* |
| | | | |
| *Stauchhärte in kPa* | | | |
| *- vertikal* | *184* | *195* | *220* |

Es zeigt sich auch hier, dass mit den erfindungsgemäßen Verbindungen die Stauchhärten, also die mechanischen Eigenschaften der Schäume, verbessert werden können, ohne dass Qualitätseinbußen bei den Lambda-Werten in Kauf genommen werden müssen.

### Beispiel mit erfindungsgemäßen Verbindungen als Schaumstabilisator

Es wurde das in Tabelle 8 genannte PUR-Hartschaumsystem für die Pour in Place Anwendungen verwendet.

**Tabelle 8 Formulierung Pour in Place**

| Komponente | Gewichtsanteil |
|---|---|
| Voranol RN 490 | 70 Teile |
| Terate 203 | 20 Teile |
| Stepanpol PS 3152 | 10 Teile |
| TCPP | 6 Teile |
| N,N-Dimethylethanolamin | 0,35 Teile |
| DMCHA | 1,6 Teile |
| Kosmos 19 | 0,07 |
| Wasser | 0,33 Teile |
| Schaumstabilisator | 1,3 Teile |
| cyclo-Pentan | 21 Teile |
| Desmodur 44V20L | 151 Teile |

Die Ergebnisse der Pour in Place Anwendungen sind in Tabelle 9 angegeben.

**Tabelle 9: Ergebnisse zu Pour in Place**

| Bsp. | Stabilisator | Defekte innen (1-10) | Porenstruktur (1-10) | Steigverhalten | Oberfläche |
|---|---|---|---|---|---|
| 13a | OHV-2 | 6 | 5 | 5 | 5 |
| 13b | OHV-3 | 6 | 6 | 5 | 5 |
| 13-Vgl | Siloxan 1 | 8 | 7 | 6 | 7 |

Die Beispiele 13a und 13b zeigen, dass die erfindungsgemäßen Verbindungen als stabilisierende Komponente bei der Herstellung von PU-Schäumen verwendet werden können. Es werden vergleichbar gute Schäume wie mit Si-haltigen Stabilisatoren in Beispiel 13-Vgl. erhalten.

## Patentansprüche

1. Zusammensetzung zur Herstellung von Polyurethanhartschaum, umfassend zumindest eine Isocyanat-Komponente, eine Polyolkomponente, optional einen Katalysator, der die Ausbildung einer Urethan- oder Isocyanurat-Bindung katalysiert, optional Treibmittel,
wobei die Zusammensetzung zusätzlich mindestens eine OH-funktionelle Verbindung (OHV) aufweist, erhältlich durch die teilweise oder vollständige Hydrierung von Keton-Aldehydharzen, wobei diese OH-funktionelle Verbindung mindestens ein Strukturelement der Formel (1a) sowie optional der Formeln (1b) und/oder (1c) enthält, 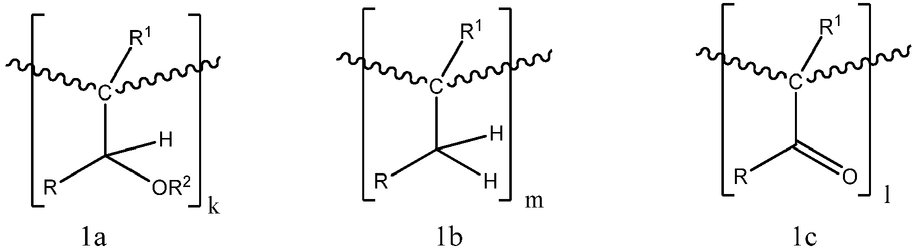 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können,
R¹ = H, CH₂OH,
R² = H, oder ein Rest der Formel -(CH₂-CH(R')O-)_{y}-H
mit R' gleich Wasserstoff, Methyl, Ethyl oder Phenyl und y = 1 bis 50,
k = 2 bis 15, bevorzugt 3 bis 12, besonders bevorzugt 4 bis 11
m = 0 bis 13, bevorzugt 0 bis 9
I = 0 bis 2
wobei die Summe aus k+l+m zwischen 5 und 15, vorzugsweise zwischen 5 und 12 liegt und k > m ist,
mit der Maßgabe, dass zumindest 90 Gew.-Teile der enthaltenen Polyole bezogen auf 100 Gew.-Teile Polyolkomponente eine OH-Zahl größer 100, vorzugsweise größer 150, insbesondere größer 200 aufweisen.

2. Zusammensetzung nach Anspruch 1, **dadurch gekennzeichnet, dass** die OH-funktionelle Verbindung (OHV) in Gesamtmenge in einem Massenanteil von 0,5 bis 100,0 Teilen, bevorzugt 1 bis 80 Teilen und besonders bevorzugt 3 bis 50 Teilen bezogen auf 100 Teile Polyolkomponente enthalten ist.

3. Zusammensetzung nach Anspruch 1, **dadurch gekennzeichnet, dass** die OH-funktionelle Verbindung (OHV) in Gesamtmenge in einem Massenanteil von zumindest 30 Teilen, bevorzugt zumindest 35 Teilen, besonders bevorzugt zumindest 40 Teilen bezogen auf 100 Teile Polyolkomponente enthalten ist.

4. Zusammensetzung nach einem der Ansprüche 1 bis 3, **dadurch gekennzeichnet, dass** weiterhin Polyesterpolyole enthalten sind.

5. Verfahren zur Herstellung von Polyurethanhartschaum, durch Umsetzung einer oder mehrerer Polyolkomponenten mit einer oder mehrerer Isocyanatkomponenten, **dadurch gekennzeichnet, dass** die Umsetzung in Gegenwart von mindestens einer OH-funktionellen Verbindung (OHV) erfolgt, erhältlich durch die teilweise oder vollständige Hydrierung von Keton-Aldehydharzen, wobei diese OH-funktionelle Verbindung mindestens ein Strukturelement der Formel (1a) sowie optional der Formeln (1b) und/oder (1c) enthält, 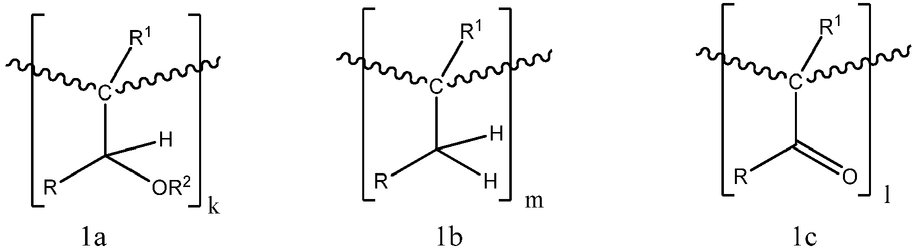 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können,
R¹ = H, CH₂OH,
R² = H, oder ein Rest der Formel -(CH₂-CH(R')O-)_{y}-H
mit R' gleich Wasserstoff, Methyl, Ethyl oder Phenyl und y = 1 bis 50,
k = 2 bis 15, bevorzugt 3 bis 12, besonders bevorzugt 4 bis 11
m = 0 bis 13, bevorzugt 0 bis 9
I = 0 bis 2
wobei die Summe aus k+l+m zwischen 5 und 15, vorzugsweise zwischen 5 und 12 liegt und k > m ist,
mit der Maßgabe, dass zumindest 90 Gew.-Teile der eingesetzten Polyole bezogen auf 100 Gew.-Teile Polyolkomponente eine OH-Zahl größer 100, vorzugsweise größer 150, insbesondere größer 200 aufweisen.

6. Polyurethanhartschaum, erhältlich durch ein Verfahren nach Anspruch 5.

7. Polyurethanhartschaum nach Anspruch 6, **dadurch gekennzeichnet, dass** das Raumgewicht von 5 bis 750 kg/m³, vorzugsweise von 5 bis 350 kg/m³ beträgt.

8. Polyurethanhartschaum nach Anspruch 6 oder 7, **dadurch gekennzeichnet, dass** die Geschlossenzelligkeit > 80%, vorzugsweise > 90 % beträgt, wobei die Geschlossenzelligkeit bestimmt wird nach DIN ISO 4590.

9. Polyurethanschaum nach einem der Ansprüche 6 bis 8, **dadurch gekennzeichnet, dass** er 0,1 bis 60 Massen-%, bevorzugt 0,5 bis 40 Massen-% und besonders bevorzugt von 1 bis 30 Massen-% an OH-funktionellen Verbindungen (OHV) aufweist.

10. Verwendung des Schaums nach einem der Ansprüche 6 bis 9 als Isolationsmaterial in der Kältetechnik, in Kühlmöbeln, im Bau-, Automobil-, Schiffbau- und/oder Elektronikbereich, als Dämmplatten, als Sprühschaum, als Einkomponentenschaum.

11. Verwendung von OH-funktionellen Verbindungen (OHV), erhältlich durch die teilweise oder vollständige Hydrierung von Keton-Aldehydharzen, wobei die OH-funktionelle Verbindung mindestens ein Strukturelement der Formel (1a) sowie optional der Formeln (1b) und/oder (1c) enthält, 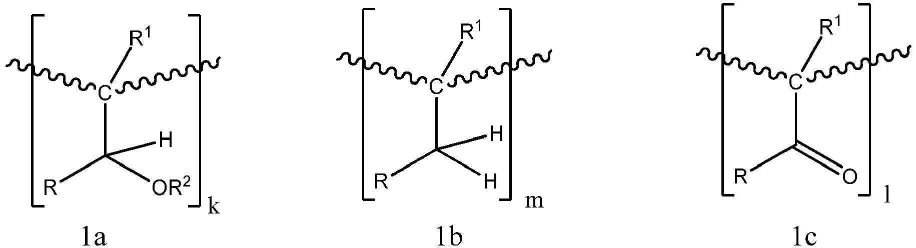 mit
R = aromatischer Kohlenwasserstoffrest mit 6-14 Kohlenstoffatomen oder (cyclo)aliphatischer Kohlenwasserstoffrest mit 1-12 Kohlenstoffatomen, wobei die Kohlenwasserstoffreste ggf. substituiert sein können,
R¹ = H, CH₂OH,
R² = H, oder ein Rest der Formel -(CH₂-CH(R')O-)_{y}-H
mit R' gleich Wasserstoff, Methyl, Ethyl oder Phenyl und y = 1 bis 50,
k = 2 bis 15, bevorzugt 3 bis 12, besonders bevorzugt 4 bis 11
m = 0 bis 13, bevorzugt 0 bis 9
I = 0 bis 2
wobei die Summe aus k+l+m zwischen 5 und 15, vorzugsweise zwischen 5 und 12 liegt und k > m ist,
bei der Herstellung von PU-Hartschäumen.

12. Verwendung nach Anspruch 11 zur Verringerung des Schrumpfes, wobei der Schrumpf ermittelt wird durch mehrmaliges Vermessen der Volumina der Probekörper nach verschieden langen Lagerzeiten.

13. Verwendung nach Anspruch 11 als schaumstabilisierende Komponente bei der Herstellung von PU-Schäumen.

14. Verwendung nach Anspruch 11 zur Verbesserung der Brandwidrigkeit des PU-Schaums, vorzugsweise der Flammwidrigkeit und/oder Reduktion der Flammhöhe, insbesondere zur Erfüllung der Brandschutznorm von mindestens B2 gemäß DIN 4102-1.

15. Verwendung nach Anspruch 11 zur Verbesserung der Stauchhärte, bestimmbar nach DIN 53421.

## Claims

1. Composition for production of rigid polyurethane foam, comprising at least one isocyanate component, a polyol component, optionally a catalyst which catalyses the formation of a urethane or isocyanurate bond, optionally blowing agent,
wherein the composition additionally includes at least one OH-functional compound (OHC) obtainable by the partial or complete hydrogenation of ketone-aldehyde resins, wherein this OH-functional compound contains at least one structural element of the formula (1a) and optionally of the formulae (1b) and/or (1c), 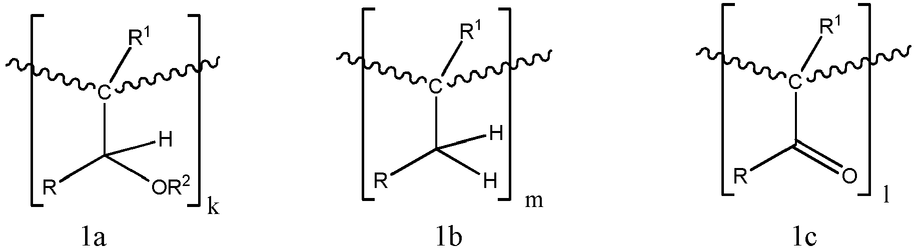 with
R = aromatic hydrocarbyl radical having 6-14 carbon atoms or (cyclo)aliphatic hydrocarbyl radical having 1-12 carbon atoms, where the hydrocarbyl radicals may optionally be substituted,
R¹ = H, CH₂OH,
R² = H, or a radical of the formula -(CH₂-CH(R')O-)_{y}-H where R' is hydrogen, methyl, ethyl or phenyl and y = 1 to 50,
k = 2 to 15, preferably 3 to 12, more preferably 4 to 11,
m = 0 to 13, preferably 0 to 9,
1 = 0 to 2,
where the sum of k + l + m is from 5 to 15, preferably from 5 to 12, and k > m,
with the proviso that at least 90 parts by weight of the polyols present have an OH number greater than 100, preferably greater than 150, especially greater than 200, based on 100 parts by weight of polyol component.

2. Composition according to Claim 1, **characterized in that** the OH-functional compound (OHC) is present in a total proportion by mass of 0.5 to 100.0 parts, preferably 1 to 80 parts and more preferably 3 to 50 parts, based on 100 parts polyol component.

3. Composition according to Claim 1, **characterized in that** the OH-functional compound (OHC) is present in a total proportion by mass of at least 30 parts, preferably at least 35 parts, more preferably at least 40 parts, based on 100 parts polyol component.

4. Composition according to any of Claims 1 to 3, **characterized in that** polyester polyols are additionally present.

5. Process for producing rigid polyurethane foam, by reacting one or more polyol components with one or more isocyanate components, **characterized in that** the reaction is effected in the presence of at least one OH-functional compound (OHC) obtainable by the partial or full hydrogenation of ketone-aldehyde resins, where this OH-functional compound contains at least one structural element of the formula (1a) and optionally of the formulae (1b) and/or (1c), 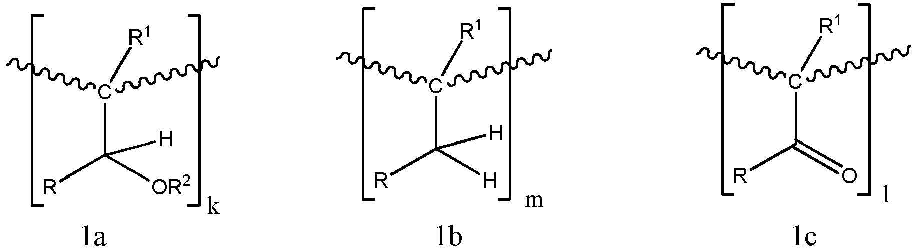 with
R = aromatic hydrocarbyl radical having 6-14 carbon atoms or (cyclo)aliphatic hydrocarbyl radical having 1-12 carbon atoms, where the hydrocarbyl radicals may optionally be substituted,
R¹ = H, CH₂OH,
R² = H, or a radical of the formula -(CH₂-CH(R')O-)_{y}-H where R' is hydrogen, methyl, ethyl or phenyl and y = 1 to 50,
k = 2 to 15, preferably 3 to 12, more preferably 4 to 11,
m = 0 to 13, preferably 0 to 9,
1 = 0 to 2,
where the sum of k + l + m is from 5 to 15, preferably from 5 to 12, and k > m,
with the proviso that at least 90 parts by weight of the polyols used have an OH number greater than 100, preferably greater than 150, especially greater than 200, based on 100 parts by weight of polyol component.

6. Rigid polyurethane foam, obtainable by a process according to Claim 5.

7. Rigid polyurethane foam according to Claim 6, **characterized in that** the density is from 5 to 750 kg/m³, preferably from 5 to 350 kg/m³.

8. Rigid polyurethane foam according to Claim 6 or 7, **characterized in that** the closed-cell content is > 80%, preferably > 90%, the closed-cell content being determined in accordance with DIN ISO 4590.

9. Polyurethane foam according to any of Claims 6 to 8, **characterized in that** it includes 0.1% to 60% by mass, preferably 0.5% to 40% by mass and especially preferably from 1% to 30% by mass of OH-functional compounds (OHC).

10. Use of the foam according to any of Claims 6 to 9 as electronics sector, insulation material, in refrigeration technology, in refrigeration equipment, in the construction sector, automobile sector, shipbuilding sector and/or as insulation panels, as spray foam, as one-component foam.

11. Use of OH-functional compounds (OHC) obtainable by the partial or complete hydrogenation of ketone-aldehyde resins, wherein the OH-functional compound contains at least one structural element of the formula (1a) and optionally of the formulae (1b) and/or (1c), 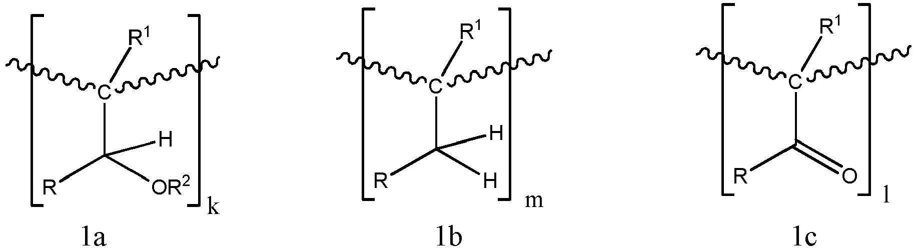 with
R = aromatic hydrocarbyl radical having 6-14 carbon atoms or (cyclo)aliphatic hydrocarbyl radical having 1-12 carbon atoms, where the hydrocarbyl radicals may optionally be substituted,
R¹ = H, CH₂OH,
R² = H, or a radical of the formula -(CH₂-CH(R')O-)_{y}-H where R' is hydrogen, methyl, ethyl or phenyl and y = 1 to 50,
k = 2 to 15, preferably 3 to 12, more preferably 4 to 11,
m = 0 to 13, preferably 0 to 9,
1 = 0 to 2,
where the sum of k + l + m is from 5 to 15, preferably from 5 to 12, and k > m,
in the production of rigid PU foams.

12. Use according to Claim 11 for reduction of shrinkage, shrinkage being determined by repeatedly measuring the volumes of the specimens after storage times of varying length.

13. Use according to Claim 11 as a foam-stabilizing component in the production of PU foams.

14. Use according to Claim 11 for improving the fire resistance of the PU foam, preferably the flame resistance and/or reduction in the flame height, especially for compliance with the fire protection standard of at least B2 according to DIN 4102-1.

15. Use according to Claim 11 for improving compressive strength, determinable in accordance with DIN 53421.

## Revendications

1. Composition pour la fabrication d'une mousse dure de polyuréthane, comprenant au moins un composant isocyanate, un composant polyol, éventuellement un catalyseur, qui catalyse la formation d'une liaison uréthane ou isocyanurate, éventuellement un agent gonflant,
la composition comprenant en outre au moins un composé à fonction OH (OHV), pouvant être obtenu par l'hydrogénation partielle ou totale de résines de cétone-aldéhyde, ce composé à fonction OH contenant au moins un élément structural de la formule (la), ainsi qu'éventuellement des formules (1b) et/ou (1c), 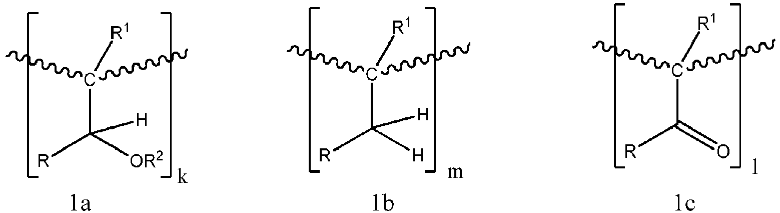 avec
R = radical hydrocarboné aromatique de 6 à 14 atomes de carbone ou radical hydrocarboné (cyclo)aliphatique de 1 à 12 atomes de carbone, les radicaux hydrocarbonés pouvant éventuellement être substitués,
R¹ = H, CH₂OH,
R² = H, ou un radical de la formule - (CH₂-CH(R')O-)_{y}-H, avec R' représentant hydrogène, méthyle, éthyle ou phényle, et y = 1 à 50,
k = 2 à 15, de préférence 3 à 12, de manière particulièrement préférée 4 à 11,
m = 0 à 13, de préférence 0 à 9,
l = 0 à 2,
la somme de k+l+m étant comprise entre 5 et 15, de préférence entre 5 et 12, et k > m,
à condition qu'au moins 90 parties en poids des polyols contenus, par rapport à 100 parties en poids du composant polyol, présentent un indice OH supérieur à 100, de préférence supérieur à 150, notamment supérieur à 200.

2. Composition selon la revendication 1, **caractérisée en ce que** le composé à fonction OH (OHV) est contenu en quantité totale en une proportion en masse de 0,5 à 100,0 parties, de préférence de 1 à 80 parties, et de manière particulièrement préférée de 3 à 50 parties, par rapport à 100 parties du composant polyol.

3. Composition selon la revendication 1, **caractérisée en ce que** le composé à fonction OH (OHV) est contenu en quantité totale en une proportion en masse d'au moins 30 parties, de préférence d'au moins 35 parties, de manière particulièrement préférée d'au moins 40 parties, par rapport à 100 parties du composant polyol.

4. Composition selon l'une quelconque des revendications 1 à 3, **caractérisée en ce que** des polyester-polyols sont en outre contenus.

5. Procédé de fabrication d'une mousse dure de polyuréthane, par mise en réaction d'un ou de plusieurs composants polyols avec un ou plusieurs composants isocyanate, **caractérisé en ce que** la réaction a lieu en présence d'au moins un composé à fonction OH (OHV), pouvant être obtenu par l'hydrogénation partielle ou totale de résines de cétone-aldéhyde, ce composé à fonction OH contenant au moins un élément structural de la formule (la), ainsi qu'éventuellement des formules (1b) et/ou (1c), 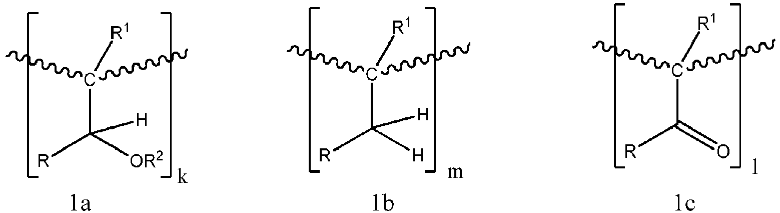 avec
R = radical hydrocarboné aromatique de 6 à 14 atomes de carbone ou radical hydrocarboné (cyclo)aliphatique de 1 à 12 atomes de carbone, les radicaux hydrocarbonés pouvant éventuellement être substitués,
R¹ = H, CH₂OH,
R² = H, ou un radical de la formule -(CH₂-CH(R')O-)_{y}-H, avec R' représentant hydrogène, méthyle, éthyle ou phényle, et y = 1 à 50,
k = 2 à 15, de préférence 3 à 12, de manière particulièrement préférée 4 à 11,
m = 0 à 13, de préférence 0 à 9,
l = 0 à 2,
la somme de k+l+m étant comprise entre 5 et 15, de préférence entre 5 et 12, et k > m,
à condition qu'au moins 90 parties en poids des polyols utilisés, par rapport à 100 parties en poids du composant polyol, présentent un indice OH supérieur à 100, de préférence supérieur à 150, notamment supérieur à 200.

6. Mousse dure de polyuréthane, pouvant être obtenue par un procédé selon la revendication 5.

7. Mousse dure de polyuréthane selon la revendication 6, **caractérisée en ce que** la densité apparente est de 5 à 750 kg/m³, de préférence de 5 à 350 kg/m³.

8. Mousse dure de polyuréthane selon la revendication 6 ou 7, **caractérisée en ce que** la teneur en cellules fermées est > 80 %, de préférence > 90 %, la teneur en cellules fermées étant déterminée selon DIN ISO 4590.

9. Mousse de polyuréthane selon l'une quelconque des revendications 6 à 8, **caractérisée en ce qu'**elle comprend 0,1 à 60 % en masse, de préférence 0,5 à 40 % en masse, et de manière particulièrement préférée 1 à 30 % en masse, de composés à fonction OH (OHV).

10. Utilisation de la mousse selon l'une quelconque des revendications 6 à 9 en tant que matériau isolant dans la technologie frigorifique, dans des unités de réfrigération, dans le domaine de la construction, dans le domaine automobile, dans le domaine de la construction navale et/ou dans le domaine électronique, en tant que panneaux isolants, en tant que mousse à pulvériser, en tant que mousse monocomposante.

11. Utilisation de composés à fonction OH (OHV), pouvant être obtenus par l'hydrogénation partielle ou totale de résines de cétone-aldéhyde, le composé à fonction OH contenant au moins un élément structural de la formule (la), ainsi qu'éventuellement des formules (1b) et/ou (1c), 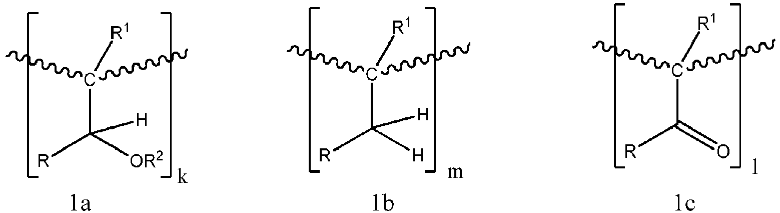 avec
R = radical hydrocarboné aromatique de 6 à 14 atomes de carbone ou radical hydrocarboné (cyclo)aliphatique de 1 à 12 atomes de carbone, les radicaux hydrocarbonés pouvant éventuellement être substitués,
R¹ = H, CH₂OH,
R² = H, ou un radical de la formule -(CH₂-CH(R')O-)_{y}-H, avec R' représentant hydrogène, méthyle, éthyle ou phényle, et y = 1 à 50,
k = 2 à 15, de préférence 3 à 12, de manière particulièrement préférée 4 à 11,
m = 0 à 13, de préférence 0 à 9,
l = 0 à 2,
la somme de k+l+m étant comprise entre 5 et 15, de préférence entre 5 et 12, et k > m,
lors de la fabrication de mousses dures de PU.

12. Utilisation selon la revendication 11 pour la réduction du retrait, le retrait étant déterminé par mesure à plusieurs reprises des volumes des éprouvettes après des temps de stockage de différentes longueurs.

13. Utilisation selon la revendication 11 en tant que composant de stabilisation de mousses lors de la fabrication de mousses de PU.

14. Utilisation selon la revendication 11 pour améliorer la résistance à l'incendie de la mousse de PU, notamment la résistance à la flamme, et/ou pour réduire la hauteur de la flamme, notamment pour satisfaire au moins la norme de protection contre les incendies de catégorie B2 selon DIN 4102-1.

15. Utilisation selon la revendication 11 pour améliorer la dureté sous compression, pouvant être déterminée selon DIN 53421.
